(19) Europäisches Patentamt
European Patent Office
Office européen des brevets

(11) Publication number: **0 194 766**
**B1**

(12) # EUROPEAN PATENT SPECIFICATION

(45) Date of publication of the patent specification: **25.01.89**

(51) Int. Cl.⁴: **B 01 J 41/12,** B 01 J 47/12, D 06 M 13/54, D 06 M 13/36

(21) Application number: **86301130.0**

(22) Date of filling: **19.02.86**

(54) **Cationic fibres suitable for ion-exchange materials and their production.**

(30) Priority: **12.03.85 GB 8506361**

(43) Date of publication of application: **17.09.86 Bulletin 86/38**

(45) Publication of the grant of the patent: **25.01.89 Bulletin 89/4**

(84) Designated Contracting States: **AT BE CH DE FR GB IT LI LU NL SE**

(56) References cited:
**DE-A-1 595 542**
**DE-A-1 720 525**
**DE-A-3 140 445**
**DE-B-1 595 700**
**US-A-2 862 892**

(73) Proprietor: **COURTAULDS PLC, 18, Hanover Square, London W1A 2BB (GB)**

(72) Inventor: **Borrell, Peter, 9 Brigg Road Hibaldstow, Brigg South Humberside, DN20 9PB (GB)**
Inventor: **Harrison, Philip David, 137 Tunnel Road Galley Common, Nuneaton Warwickshire CV10 9NW (GB)**
Inventor: **Marriott, John Christopher, 18a Thornby Avenue Kenilworth, Warwickshire (GB)**

(74) Representative: **Hale, Stephen Geoffrey, J.Y. & G.W. Johnson Furnival House 14/18 High Holborn, London WC1V 6DE (GB)**

**EP 0 194 766 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

**Description**

This invention is concerned with cationic fibres suitable as anion-exchange materials.

Son-exchange materials in fibrous form have a number of potential advantages over the usual granular or bead form. Firstly, fibrous material has a much greater surface area to volume ratio, leading to a greater rate of ion exchange. Secondly, the transverse dimensions of the fibrous material are small so that all the cationic sites are accessible to the liquid being treated. Thirdly, although the transverse dimensions are small, the length of the fibres is considerably greater, preventing packing of the ion-exchange material to the extent that it cannot be permeated by the liquid being treated.

There is a need for a wide range of capabilities in ion-exchange materials: for some uses a weakly basic cationic group is needed, for others a strongly basic group. If these were to be tailor-made for each use by spinning fibres from a polymer endowed with the requisite cations, the cost of manufacture would preclude their adoption.

We have found a method of generating weakly basic and strongly basic groups in polyacrylonitrile fibres of the kind made in large quantities for textile uses and therefore generally and cheaply available. By a polyacrylonitrile fibre we mean a fibre formed of a polymer comprising at least 85 per cent by weight acrylonitrile units. The method is capable of being controlled to generate the required cation content, and the products demonstrate the anticipated advantages.

An ion-exchange material according to the invention is in the form of cross-linked, water-insoluble polyacrylonitrile fibres carrying a plurality of covalently bound basic groups selected from tertiary amine, imidazoline, tetrahydropyrimidine and quaternary ammonium groups. Mixtures of these groups may be present.

Such fibres can be obtained by reacting a cross-linked, water-insoluble polyacrylonitrile fibre with a diamine corresponding to the formula

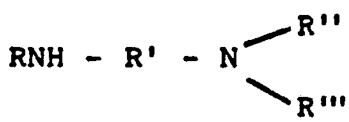

where R is hydrogen or alkyl, R′ is alkylene and R″ and R‴ are each independently alkyl, to form a plurality of tertiary amine groups of the formula

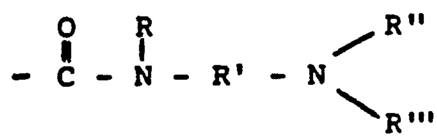

or with a diamine of the formula RNH - $R^{IV}$ - $NH_2$, where R is hydrogen or alkyl and $R^{IV}$ is 1,2- or 1,3-alkylene, to form a plurality of groups of the formula

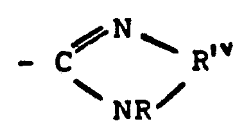

that is imidazoline or tetrahydropyrimidine groups.

The fibres containing groups of the formula

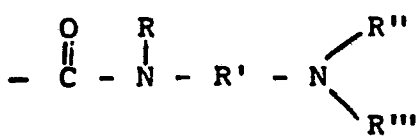

can be reacted with an alkylating agent, $R^VX$, to convert at least some of the tertiary amine groups of the above formula to quaternary ammonium groups of the formula

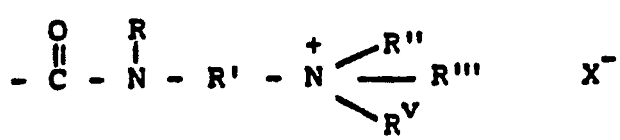

where $R^V$ is alkyl and $X^-$ is an anion.

In all the above formulae the group R is preferably hydrogen. The group R′ preferably contains 2 to 6 carbon atoms and is most preferably $-CH_2CH_2-$ or $-CH_2CH_2CH_2-$. The groups R″, R‴ and $R^V$, and R where it is alkyl,

preferably contain 1 to 4 carbon atoms. The group $R^{IV}$ is preferably $-CH_2CH_2CH_2-$ or more preferably $-CH_2CH_2-$.

The invention requires as a starting material cross-linked, water-insoluble polyacrylonitrile fibres. Such a material can be made by extruding a solution of the polyacrylonitrile to form fibres and cross-linking the polyacrylonitrile after the fibre-forming process. There are many ways in which this may be done, for example the fibres may be reacted with formaldehyde under conditions resulting in the formation of transmolecular methylene-bis-acrylamide units of the form

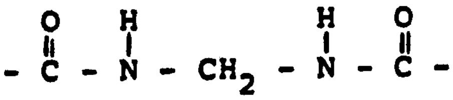

This method is most easily applied to polyacrylonitrile fibres containing amide groups.

Or, particularly when the polyacrylonitrile comprises ester groups as occurs when the polyacrylonitrile is a copolymer of acrylonitrile and methyl acrylate, reaction with a di-primary amine in which the amino groups are separated by at least a 1,4-alkylene chain, can lead to diamide cross-links of the form

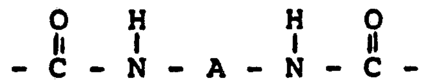

where A is an alkylene group having a chain length of at least 4 carbon atoms.

Another alternative is to react the polyacrylonitrile fibres with hydrazine to form triazoline cross-links of the form

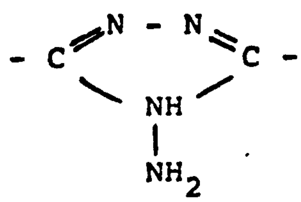

The latter method of cross-linking the polymer generates cationic groups which contribute to the overall basicity of the polymer of this invention.

The polymers of this invention may, therefore, be furnished with imidazoline, tetrahydropyrimidine or tertiary amino groups and quaternary ammonium groups in varying proportions or substantially exclusively with the weakly basic groups - imidazoline, tetrahydropyrimidine or tertiary amino - or substantially exclusively with the strongly basic quaternary ammonium groups. The overall proportion of cationic groups in the polymer is controllable by the concentration of reactants and the pressure, temperature and duration of the reaction. It is to be noted that the physical properties of the fibres are reduced in proportion to the cationic content and, for some uses, this imposes a limit on the ion-exchange capacity which can usefully be generated. The physical properties of the fibres are adequate for most uses up to an anion-exchange capacity of 7 millimol $gram^{-1}$ based on the weight of dry fibre as chloride salt for the weakly basic fibres and up to 5 millimol $gram^{-1}$ for the strongly basic fibres.

In general when reacting the polyacrylonitrile fibres with a cross-linking agent, a considerable excess of the agent is employed to shorten the time needed to achieve a chosen level of modification of the polyacrylonitrile. The reaction mass may then be cooled (which of itself is sufficient to halt the reaction leading to further modificiation) and the fibres separated from the liquid reagent, or the fibres may be separated immediately from hot reagent.

The same principles apply to the reaction generating cationic sites on the cross-linked fibres - an excess of reagent is used to arrive at the modified fibres in a shorter time and the fibres and reagent liquor are separated to prevent further reaction. Make-up quantities of the reagent may be added to the liquor which is then reused in treating another batch of fibres.

The reaction of the cross-linked fibres with a diamine of the formula

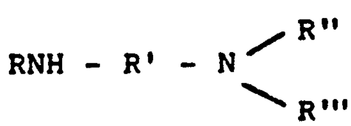

to introduce tertiary amine groups is preferably carried out in the presence of a small amount of water, for example 0.15 - 1.0 mole water per mole of diamine. The reaction of the cross-linked fibres with an amine of the

formula RNH - $R^{IV}$ - $NH_2$ to form imidazoline or tetrahydropyrimidine groups is preferably carried out in the absence of water. When the cross-linking reaction is carried out in the presence of water (as is preferred when hydrazine is the cross-linking agent) the cross-linked fibre produced generally retains a substantial amount of water. When it is desired to introduce tertiary amine groups the cross-linked fibre is preferably centrifuged to reduce the water content to that required for reaction with the diamine. When it is desired to form imidazoline or tetrahydropyrimidine groups the crosslinked fibre is preferably dried.

We prefer to operate the processes of cross-linking the polyacrylonitrile fibres and the subsequent reaction developing cationic sites in the fibres under superatmospheric pressure, say of up to 500 kPa (5 atmospheres) although higher pressures may also be used. The pressurised reaction is completed in a shorter period, and requires less of an excess of a reactant, than reactions at lower pressures. For example, to complete the modification in a similar period we use a 15- to 20-fold excess of reactant liquor to fibres when operating at atmospheric pressure and a 2- to 3-fold excess when operating under 500 kPa (5 atmospheres) pressure.

The temperature of any reaction - cross-linking or generating cationic groups - should not exceed 150°C in order to avoid uncontrollable reactions between the nitrile groups of the polymer, which reduce the physical properties of the fibres. The temperature of the reaction between the cross-linked fibres and the amine is preferably in the range 70 - 150°C.

The invention is exemplified by the following Examples in which percentage concentrations are by weight.

**Example 1**

1.1 Manufacture of cross-linked polyacrylonitrile fibres

22 kilograms of "Courtelle" (Registered Trade Mark), a commercial polyacrylonitrile fibre, was packed in the annular compartment of a package-dyeing machine. 110 litres of a 4.8 per cent solution of hydrazine in water was raised to and maintained at 127°C and recirculated by a pump through the perforated column around which the fibre was packed, permeating the fibre, and, thereafter, returning to the pump and heater. The pressure in the vessel was maintained at 410 kPa (60 p.s.i.) and the recirculation of the liquor continued for two hours.

At the conclusion of the reaction, the liquor was drained from the apparatus and demineralised water was substituted. The fibres were washed by circulating the water at ambient temperature in the same way as the liquor had been circulated. The washing process lasted three minutes and was repeated with fresh water four times.

1.2 Generating heterocyclic basic groups in the cross-linked fibres

The cross-linked fibres from Example 1.1 were removed, dried and reinstated in the package-dyeing machine, and 100 kilograms of ethylene diamine was introduced as the process liquor. The pressure in the vessel was maintained at 410 kPa (60 p.s.i.) and the temperature of the liquor maintained at 100°C. The recirculation of the liquor was continued for three hours. The liquor was drained from the dyeing machine and the mass of fibres copiously washed as before by introducing water as the process liquor. The fibres then contained imidazoline groups.

**Example 2**

2.1 Generating tertiary amine groups in the cross-linked fibre

25 gms of the cross-linked fibres as produced in Example 1.1 was placed in a reaction flask fitted with a reflux condenser. 185 $cm^3$ of N,N-dimethyl-1,3-propanediamine was added together with 33 $cm^3$ water. The mixture was heated to the boil in an isomantle and refluxed for ten hours. After cooling the reaction mixture, the excess liquid was removed and the fibres washed in methylated spirit/water mixture. The fibres then contained tertiary amine groups.

2.2 Generating quaternary ammonium groups in the fibre

The fibres produced in Example 2.1 were transferred to a reaction flask fitted with reflux condenser, stirrer and two dropping funnels. 1 litre of water was added and heated to 30°C. 140 $cm^3$ of dimethyl sulphate was added dropwise over 30 minutes. The pH of the reaction mixture was maintained at 8 - 11 by dropwise addition of 20 per cent sodium hydroxide over a period of three hours. During this time the mixture was stirred and maintained at 30°C. The reaction was terminated by dropwise addition of 250 $cm^3$ 25 per cent aqueous $NH_3$ solution and heating to 50°C. After 15 minutes the mixture was cooled, the liquor removed and the fibres washed in water. The fibres then contained quaternary ammonium groups.

Analysis of fibres from Examples 1.2, 2.1 and 2.2.

The ion-exchange capacity of the weakly basic fibres made as described in Examples 1.2 and 2.1 may be determined as follows:

(a) convert the basic groups to the chloride salt by agitating the fibre in 0.5M HCl for 30 minutes;
(b) wash excess acid from the fibre using industrial methylated spirits until the effluent is neutral to methyl orange;
(c) dry a sample of the fibre to a constant weight in a vacuum oven at 60°C to determine the solids content;
(d) agitate 1 gram of the moist fibre in 100 $cm^3$ of 1 per cent aqueous $NH_3$ solution for 30 minutes;
(e) filter the fibre from the liquid, wash thoroughly with water and combine the washings and the filtrate. Note the volume of the combined washings and filtrate;
(f) fitrate an aliquot of the combined washings and filtrate with a standard Ag $NO_3$ solution and calculate chloride content of 1 gm of dry fibre and express ion-exchange capacity as millimoles $gram^{-1}$ (dry, $Cl^-$ form).

The fibre produced in Example 1.2 had an ion-exchange capacity of 6.3 millimoles $gram^{-1}$. The ion-exchange capacity of the fibre from Example 2.1 was 45 millimoles $gram^{-1}$.

The fibre made as described in Example 2.2 was also put through the analytical steps (a) and (f) and finally the fibre sample was placed in 100 $cm^3$ of a 5 per cent $Na_2SO_4$ solution and agitated for 30 minutes. An aliquot of the sodium sulphate solution, now containing chloride ions exchanged from the quaternary ammonium groups of the fibre, was titrated with standard Ag $NO_3$ solution and the exchange capacity calculated. The strongly basic ion-exchange capacity of the fibre was 2.5 millimoles $gram^{-1}$ and its weakly basic ion-exchange capacity was 1.8 millimoles $gram^{-1}$.

## Example 3

3.1 Manufacture of cross-linked polyacrylonitrile fibre

20 kg "Courtelle" polyacrylonitrile fibres was cross-linked with hydrazine using the reaction conditions of Example 1.1 but with a liquor recirculation time of 30 minutes.

3.2 Generating tertiary amine groups in the cross-linked fibre

The cross-linked fibres from the process of Example 3.1 were removed, centrifuged to reduce the water content to 129 per cent w/w and reinstated in the package-dyeing machine. N,N-dimethyl-1,3-propane diamine (123 kg) was introduced as the process liquor. The pressure in the vessel was maintained at 410 kPa (60 p.s.i.) and the temperature of the liquor maintained at 125°C. The recirculation of the liquor was continued for 4.5 hours. The cooled liquor was drained from the dyeing machine and the mass of fibres copiously washed by introducing water as the process liquor. The fibres then contained tertiary amine groups.

3.3 Generating quaternary ammonium groups in the fibre

The fibres produced in Example 3.2 were quaternised in the package-dyeing machine by introducing dimethyl sulphate (54 kg) to recirculating water (120 kg) containing 47 per cent w/w aqueous sodium hydroxide (0.5 litre) over a period of 30 minutes and recirculation was continued for 2.5 hours. The pH of the process liquor was maintained between 8 and 10 with 47 per cent w/w aqueous sodium hydroxide and the temperature of the liquor was maintained at 30°C.

After this period, the reaction was terminated by introducing 25.5 per cent w/w aqueous ammonia (27 kg) with the temperature maintained at 45°C for 30 minutes (destroying residual dimethyl sulphate) and subsequently draining the liquor from the dyeing machine. The mass of fibres was copiously washed with water as described above. The fibres contained quaternary ammonium groups and had an ion-exchange capacity similar to the product of Example 2.2.

## Claims

1. An ion-exchange material carrying basic groups, characterised in that the ion-exchange material is in the form of cross-linked, water-insoluble polyacrylonitrile fibres carrying a plurality of covalently bound basic groups selected from tertiary amine, imidazoline, tetrahydropyrimidine and quaternary ammonium groups.

2. An ion-exchange material according to claim 1, characterised in that the basic groups are of the formula:

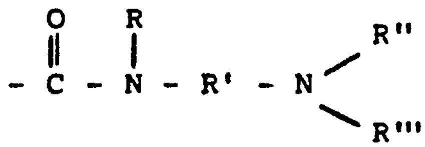

where R is hydrogen or alkyl
R′ is alkylene
and R″ and R‴ are each independently alkyl.

3. An ion-exchange material according to claim 1, characterised in that at least a proportion of the basic groups are of the formula:

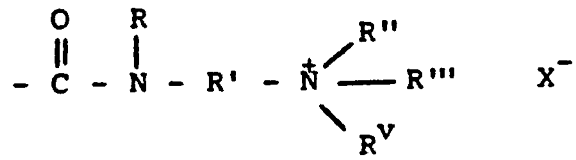

where R, R′, R″, R‴ are defined as in claim 2, $R^V$ is alkyl and $X^-$ is an anion.

4. An ion-exchange material according to claim 2 or claim 3, characterised in that in the formula of the basic groups R is hydrogen and R′ is $-CH_2CH_2-$ or $-CH_2CH_2CH_2-$.

5. An ion-exchange material according to claim 1, characterised in that the basic groups are of the formula:

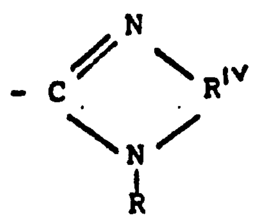

in which R is defined as in claim 2 and $R^{IV}$ is a 1,2- or 1,3-alkylene group.

6. An ion-exchange material according to claim 5, characterised in that in the formula of the basic groups R is hydrogen and $R^{IV}$ is $-CH_2CH_2-$.

7. An ion-exchange material according to any of claims 1 to 6, characterised in that the polyacrylonitrile fibres have triazoline cross-links formed by the reaction of the polyacrylonitrile fibres with hydrazine.

8. A process for the preparation of an ion-exchange material according to claim 2, characterised in that cross-linked, water-insoluble polyacrylonitrile fibres are reacted with a diamine of the formula:

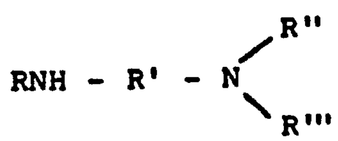

where R, R′, R″ and R‴ are defined as in claim 2.

9. A process for the preparation of an ion-exchange material according to claim 5, characterised in that cross-linked, water-insoluble polyacrylonitrile fibres are reacted with a diamine of the formula $RNH-R^{IV}-NH_2$, where R and $R^{IV}$ are defined as in claim 5.

10. A process according to claim 9, characterised in that the reaction between the cross-linked fibres and the diamine is carried out in the substantial absence of water.

11. A process according to any of claims 8 to 10, characterised in that the reaction between the cross-linked fibres and the diamine is carried out under super-atmospheric pressure.

12. A process for the on of an ion-exchange material according to claim 3, characterised in that an ion-exchange material according to claim 2 is reacted with an alkylating agent of the formula $R^VX$, where $R^V$ is alkyl and X is a group capable of forming an anion $X^-$.

**Patentansprüche**

1. Ionischenaustauschermaterial mit basischen Gruppen, dadurch gekennzeichnet, dass das Ionenaustauschermaterial als vernetzte, wasserunlösliche Polyacrylnitrilfasern mit einer Anzahl von kovalent gebundenen basischen Gruppen, welche aus tertiarem Amin, Imidazolin, Tetrahydropyrimidin und quarternären Ammoniumgruppen ausgewählt sind, vorliegt.

2. Ionenaustauschermaterial nach Anspruch 1, dadurch gekennzeichnet, dass die basischen Gruppen solche der Formel

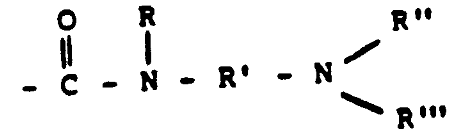

worin R Wasserstoff oder Alkyl,
R' Alkylen
und R'' und R''' unabhängig jeweils Alkyle sind.

3. Ionenaustauschermaterial nach Anspruch 1, dadurch gekennzeichnet, dass mindestens ein Teil der basischen Gruppen solche der Formel

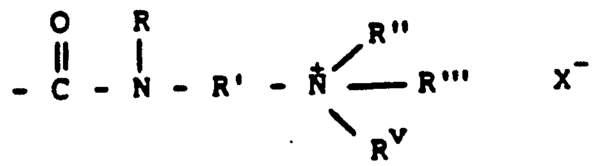

sind,
worin R, R', R'', R''' die in Anspruch 2 angegebene Bedeutung haben, $R^V$ Alkyl und $X^-$ ein Anion ist.

4. Ionenaustauschermaterial nach Anspruch 2 oder Anspruch 3, dadurch gekennzeichnet, dass in der Formel der basischen Gruppen R Wasserstoff und R' $-CH_2CH_2-$ oder $-CH_2CH_2CH_2-$ sind.

5. Ionenaustauschermaterial nach Anspruch 1, dadurch gekennzeichnet, dass die basischen Gruppen solche der Formel

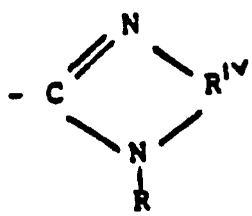

sind,
worin R die in Anspruch 2 angegebene Bedeutung hat und $R^{IV}$ eine 1,2-Alkylen- oder 1,3-Alkylen-Gruppe ist.

6. Ionenaustauschermaterial nach Anspruch 5, dadurch gekennzeichnet, dass in der Formel der basischen Gruppen R Wasserstoff und $R^{IV}$ $-CH_2CH_2-$ sind.

7. Ionenaustauschermaterial nach einem der Ansprüche 1 bis 6, dadurch gekennzeichnet, dass die Polyacrylnitrilfasern durch die Umsetzung der Polyacrylnitrilfasern mit Hydrazin gebildete Triazolinvernetzungen haben.

8. Verfahren zur Herstellung eines Ionenaustauschermaterials nach Anspruch 2, dadurch gekennzeichnet, dass man vernetzte, was serun lösliche Polyacrylnitrilfasern mit einem Diamin der Formel

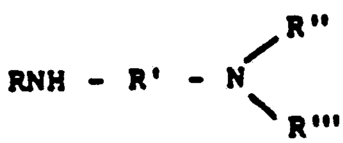

worin R, R', R'' und R''' die in Anspruch 2 angegebene Bedeutung haben, umsetzt.

9. Verfahren zur Herstellung eines Ionenaustauschermaterials nach Anspruch 5, dadurch gekennzeichnet, dass man vernetzte, wasserunlösliche Polyacrylnitrilfasern mit einem Diamin der Formel $RNH-R^{IV}-NH_2$, worin R und $R^{IV}$ die in Anspruch 5 angegebene Bedeutung haben, umsetzt.

10. Verfahren nach Anspruch 9, dadurch gekennzeichnet, dass die Umsetzung der vernetzten Fasern mit dem Diamin unter weitgehendem Ausschluss von Wasser erfolgt.

11. Verfahren nach einem der Ansprüche 8 bis 10, dadurch gekennzeichnet, dass die Umsetzung der vernetzten Fasernmit dem Diamin bei erhöhtem Druck erfolgt.

12. Verfahren zur Herstellung eines Ionenaustauschermaterials nach Anspruch 3, dadurch gekennzeichnet, dass man ein Ionenaustauschermaterial nach Anspruch 2 mit einem Alkylierungsmittel der Formel $R^VX$ umsetzt, worin $R^V$ Alkyl und X eine zur Bildung eines Anions $X^-$ befähigte Gruppe sind.

**Revendications**

1. Un materiau echangeur d'ions portant des groupes basiques, caractérisé en ce que le materiau echangeur d'ions est sous forme de fibres de polyacrylonitrile reticulées, insolubles dans l'eau, portant une pluralite de groupes basiques, lies de facon covalente, selectionnes parmi les groupes amine tertiaire, imidazoline, tetrahydropyrimidine et ammonium quaternaire.

2. Un materiau echangeur d'ions selon la revendication 1, caractérisé en ce que les groupes basiques ont la formule:

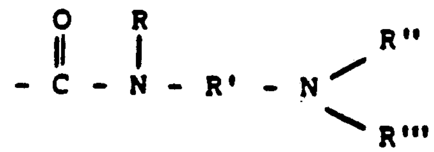

dans laquelle R est un hydrogène ou un alkyle
R' est un alkylène
et et R''' sont chacun independamment un alkyle.

3. Un materiau echangeur d'ions selon la revendication 1, caractérisé en ce qu une proportion au moins des groupes basiques ont la formule:

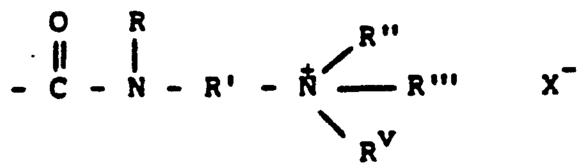

dans laquelle R, R', R'', R''' sont definis comme à la revendication 2, $R^V$ est un alkyle et $X^-$ est un anion.

4. Un materiau echangeur d'ions selon la revendication 2 ou la revendication 3, caractérisé en ce que, dans la formule des groupes basiques, R est un hydrogène et R' est $-CH_2CH_2-$ ou $-CH_2CH_2CH_2-$.

5. Un matériau échangeur d'ions selon la revendication 1, caractérisé en ce que les groupes basiques ont la formule:

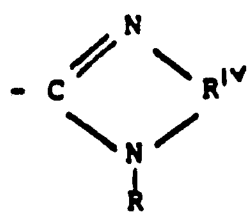

dans laquelle R est défini comme à la revendication 2 et $R^{IV}$ est un groupe alkylène-1,2 ou alkyléne-1,3.

6. Un matériau échangeur d'ions selon la revendication 5, caractérisé en ce que, dans la formule des groupes basiques, R est un hydrogène et $R^{IV}$ est $-CH_2CH_2-$.

7. Un matériau échangeur d'ions selon l'une quelconque des revendications 1 à 6, caractérisé en ce que les fibres de polyacrylonitrile ont des réticulations triazoline formées par la réaction des fibres de polyacrylonitrile sur l'hydrazine.

8. Un procédé pour la préparation d'un matériau échangeur d'ions selon la revendication 2, caractérisé en ce que l'on fait réagir les fibres de polyacrylonitrile réticulées insolubles dans l'eau sur une diamine de formule

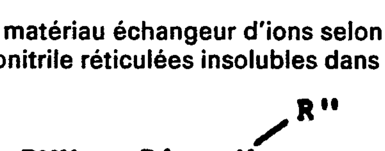

dans laquelle R, R', R'' et R''' sont définies comme à la revendication 2.

9. Un procédé pour la préparation d'un matériau échangeur d'ions selon la revendication 5, caractérisé en ce que l'on fait réagir des fibres de polyacrylonitrile réticulées insolubles dans l'eau sur une diamine de formule $RNH-R^{IV}-NH_2$, où R et $R^{IV}$ sont définis comme à la revendication 5.

13. Un procédé selon la revendication 9, caractérisé en ce que l'on effectue la réaction entre les fibres réticulées et la diamine sensiblement en l'absence d'eau.

11. Un procédé selon l'une quelconque des revendications 8 à 10, caractérisé en ce que l'on effectue la réaction entre les fibres réticulées et la diamine sous pression super-atmosphérique.

12. Un procédé pour la préparation d'un matériau échangeur d'ions selon la revendication 3, caractérisé en ce que l'on fait réagir un matériau échangeur d'ions selon la revendication 2 sur un agent alkylant de formule $R^VX$ où $R^V$ est un alkyle et X est un groupe capable de former un anion $X^-$.